# EUROPEAN PATENT SPECIFICATION

(11) **EP 1 036 042 B1**
(45) Date of publication and mention of the grant of the patent: **08.05.2002**
(21) Application number: 98965736.6
(22) Date of filing: 02.12.1998
(51) Int. Cl.: C03B 3/02, C03B 5/00

(54) **PRODUCTION OF MAN-MADE VITREOUS FIBRES**
HERSTELLUNG VON GLASARTIGEN KUNSTFASERN
PRODUCTION DE FIBRES VITREUSES

(30) Priority: 02.12.1997 EP 97309671; 02.12.1997 EP 97309668
(43) Date of publication of application: 20.09.2000
(73) Proprietor: Rockwool International A/S, DK-2640 Hedehusene (DK)
(72) Inventor: JENSEN, Soren, Lund, DK-2840 Holte (DK); JENSEN, Leif Moller, St. Valby, 4000 Roskilde (DK); MAESSEN, Thomas, Joseph, NL-5621 AJ Eindhoven (NL)
(74) Representative: Samuels, Lucy Alice
(86) International application number: EP9807826
(87) International publication number: WO9928250

(56) References cited:
- EP-A- 0 670 188
- EP-A- 0 743 286
- WO-A-87/07591
- WO-A-96/10097
- US-A- 3 627 504
- DATABASE WPI Week 19 Derwent Publications Ltd., London, GB; AN 76-35371X XP002064121 "Glass melting tank furnace" & SU 471 310 A (SARAT GLASS INS) , 5 September 1975

## Description

This invention relates to the manufacture of man-made vitreous fibres (MMVF) utilising waste material in an efficient manner.

It is conventional practice to make MMVF by a method comprising forming a melt by heating a mineral charge in a furnace and forming fibres from the melt.

Various types of furnace are used for forming the melt. Some are heated solely by electric power, for instance molybdenum electrode tank furnaces or electric arc furnaces, while some are heated solely by combustion, and some are heated by a combination of combustion and electric power. All furnaces that are heated by combustion rely upon the injection of air into the furnace in order to permit combustion. Gas or oil fired furnaces require the injection also of gas or oil. Solid fuel furnaces are charged with solid fuel which is burnt with the air which is injected into the furnace. For instance a shaft furnace, especially a cupola furnace, is charged from above with a granular charge containing solid fuel and mineral, and air is blown in through tuyeres near the base of the shaft furnace.

Many shaft and other furnaces are used for forming a metal melt associated with a minimum of slag. For instance this is the requirement in the foundry industry. It is known to inject various materials through the tuyeres in order to modify the metallic melt, for instance by adding an alloying material through the tuyeres.

When the furnaces are used, as in the invention, for MMV fibre production it is required to melt the mineral charge in such a way as to provide a melt which preferably . consists solely of molten slag. Although there may be a tendency for some elemental metal to separate out as a metal melt, this is preferably suppressed as much as possible, for instance by avoiding excessively reducing conditions in the furnace.

The charge in a shaft furnace must consist of coarse granules in order that the stack is sufficiently permeable to allow combustion gases to pass through it. Typically the granules have a size above 50 mm and are as free as reasonably possible of powder. The inclusion of powdered material in the stack reduces permeability and is unsatisfactory.

It is desirable to use mineral which is as readily and as economically available as possible, for forming the mineral charge for MMVF, so as to reduce costs. It is known to recycle industrial waste materials as part of the charge. Because the charge needs to be in coarse granular form, the most satisfactory way of including waste materials in the stack previously has been to incorporate them in briquettes. This necessitates subjecting the materials to a briquetting process.

Briquetted or other waste material introduced into the top of a furnace will initially be subjected to the conditions at the top of the furnace, and will gradually settle down the furnace as the stack melts. If the waste contains materials which are easily driven off from the granular waste, these volatile materials will be exposed only to the conditions at the top of the furnace (which are often reducing and cool compared to lower down the furnace) and will then pass out of the furnace as effluent.

It is known that, in general, the introduction into a furnace of a mineral waste containing organic components is generally undesirable. For instance US-A-4545800 and US-A-5100453 show difficulties that arise when MMVF products contaminated with organic binder are added to a furnace. Normal practice therefore is to burn off the organic component of an inorganic waste which contains organic binder, prior to adding the inorganic waste to the main furnace.

Many industrial wastes consist wholly or mainly of inorganic materials or wholly or mainly of organic materials, and disposal methods can be optimised for each. However there are a range of wastes, such as glass reinforced plastics, which have significant organic content and significant inorganic content and it is very difficult to find a cost effective way of disposing of such wastes.

According to the invention, MMV fibres are made by forming a melt by heating a mineral charge in a furnace by combustion of fuel with combustion air which is injected into the furnace and forming fibres from the melt, and in this process a powder waste of 20 to 80% by weight organic material and 80 to 20% inorganic material is injected with the combustion air, whereby the organic material is combusted and the inorganic material melts.

By saying that the inorganic material melts, we mean either that it dissolves into the melt or that it actually melts and mixes with the melt.

The invention therefore utilises these previously difficult wastes which contain significant organic and inorganic contents in such a way as simultaneously to contribute to the fuel (by combustion of the organic material) and to the mineral charge (by melting or dissolving of the inorganic material).

The invention is of particular value when the powdered waste is powdered glass reinforced plastic because this is a waste which has previously been difficult to dispose of in a useful manner.

As a result of injecting the organic-inorganic powdered blend with the combustion air, it is injected into the area of the furnace where maximum combustion occurs thereby ensuring combustion of the organic component and melting or other heating of the inorganic component. In particular, introducing it with the combustion air ensures that the organic components are subjected to combustion conditions throughout the furnace, thereby eliminating the risk of them being volatilised in non-combusted form from the top of the furnace (as may happen if they are added to the top of the furnace).

As a result of introducing the waste in powdered form, it can be obtained merely by crushing and sieving the waste, and in particular it is not necessary to convert it to briquettes.

Other wastes which can be used instead of or in addition to glass reinforced plastic are municipal sewage sludge wastes which are contaminated with significant amounts of clay or other inorganic materials, and paper sludge wastes which are contaminated with significant amounts of kaolin or other paper making filler.

The invention is primarily of value for the treatment of powdered wastes which are initially produced as a blend of 20 to 80% organic and 80 to 20% inorganic materials. The wastes often contain 30 to 70%, most usually around 40 to 60% inorganic, with the balance being organic.

When only one waste is being used in the invention, it must be a waste which contains from 20 to 80% organic material and 80 to 20% inorganic material because the invention is of particular value for utilising such wastes. When a plurality of wastes are used, preferably at least one of the wastes falls within this definition, again because it is particularly valuable to be able to utilise such a waste. In such processes, a separate waste, for instance a separate organic waste (or an organic fuel) can be added so as to increase the heating value, in which event the overall process may be operated with a blend of organic and inorganic materials containing, for instance, more than 80% organic, e.g. up to 95 or 98% by weight organic. The invention also includes processes in which separate organic and inorganic wastes are blended so that the final blended waste contains 20 to 80% organic and 80 to 20% inorganic.

In the invention the inorganic waste material may have a high content of aluminium, for instance at least 20%. The aluminium is measured as Al₂O₃ and is normally present in compound form, although small amounts of metallic aluminium may be present.

Suitable high aluminium wastes include those from the secondary production of aluminium, which are often generically described as "aluminium dross" or "aluminium oxide dross". In particular waste materials are useful which contain 0.5 to 10 wt.%, preferably 2 to 6 wt.%, more preferably below 5 wt.%, metallic aluminium, and 50 to 90 wt.%, preferably below 85 wt.%, more preferably 60 to 72 wt.%, alumina Al₂O₃. Wastes from the aluminium casting process are particularly useful. This process provides one specific alumina-rich waste material which is described in the industry as "alu-dross". This tends to contain significant proportions of metallic aluminium and is thus treated in order to retrieve the metallic aluminium. The alu-dross is generally crushed, milled and sieved. This produces some aluminium for resale and an aluminium-rich fraction which is sent to a furnace for reuse. As a byproduct an alumina-rich powder is also produced, described as "crushed alu-dross". The aluminium-rich fraction, optionally together with other aluminium-containing waste materials, is subjected to remelting in a furnace. This may be a rotating furnace or kiln. The aluminium waste may be subjected to plasma heating. A conventional furnace may also be used. Salt is usually added to the furnace in order to reduce the surface tension of the aluminium and reduce oxidation. This process produces an aluminium fraction for resale, more alu-dross and a salt slag material. The salt slag can be subjected to a wet chemical process (involving water washing and high temperature treatment) which produces a salt fraction, which is recycled to the furnace, and a further alumina-rich powder, described as "treated aluminium salt slag". Materials of this type are described for inclusion in briquettes in WO-A-99/28249 and reference should be made to that.

Other suitable high aluminium inorganic waste materials may be used and are described in WO-A-99/28249.

A particular advantage of the invention is the ability to select, for instance by blending two or more organic-inorganic wastes or by blending organic-inorganic waste with organic waste, a blend which gives the required heating value. Thus preferably the organic-inorganic blend is such that the organic component generates sufficient heating value to cause the inorganic component to melt or dissolve into the remainder of the melt in the furnace. Thus the mixed waste can be injected into the furnace without disturbing the heat balance in the furnace.

The waste must be as dry as reasonably possible so as to minimise the reducing effect of water. Generally therefore the waste has a water content of below 20 or 30% by weight, preferably below 10% by weight.

The particle size of the powdered waste is usually below 5mm, preferably below 1 or 2mm. Usually it is above 0.2 or 0.5mm.

The powdered waste may be injected with combustion air, and optionally combustible material, into a furnace (e.g. a tank furnace) in which a charge is melted. The combustible material may be oil, gas or organic waste material.

Preferably, however, the powdered waste is injected with combustion air into a shaft furnace which can be heated by gas or oil burners but is preferably heated by combustion of solid fuel in the stack of mineral charge in the shaft furnace.

A preferred process of the invention therefore comprises charging a shaft furnace with a stack of mineral charge and solid fuel, injecting combustion air and the powdered waste into the base of the furnace and thereby burning the organic material and the solid fuel and forming a melt of the mineral charge and the inorganic material, and forming fibres from the melt.

The powdered material must be injected in such a way that it does not deleteriously interfere with the combustion and melting processes which are conducted within the furnace. Although the organic material will generally be sufficient to provide localised heating at the point of injection, in some instances localised cooling may occur at the point of injection and this can be undesirable. If this is a problem, then it is desirable to preheat the combustion air, for instance to a temperature of above 700°C, e.g. 800 to 1200°C. Suitable processes and apparatus for this are described in WO-A-99/28246.

The process of the invention can be operated with deliberate substantially continuous injection of the powdered waste with the combustion air, but if desired the waste injection can be conducted only occasionally, for instance when it is desired to provide additional energy in the furnace. The amount that is injected can be varied in response to analysis of the melt, for instance as described in WO-A-99/28251.

The main mineral charge usually provides 50 to 99%, usually around 80 to 95 or 98%, by weight of the total mineral that is entering the melt, the remainder of the mineral being provided by the powdered waste. The remainder of the charge can be selected from any of the conventional materials for forming MMV fibres including virgin rock, recycled MMVF waste and other waste materials.

By appropriate choice of the nature of the inorganic material in the powdered waste and the content of the remainder of the mineral charge, it is possible to form a melt having any reasonable desired chemical analysis, suitable for the production of MMV fibres. The melt can be one which has relatively low aluminium content (for instance below 4%), optionally with phosphate, so as to provide fibres which are described as being biologically soluble. However the invention is of particular value in the production of high aluminium fibres, especially because of the energy and other raw material requirements normally associated with these.

Suitable high aluminium, biologically soluble, fibres which can advantageously be made in the present invention are described in WO-A-96/14454 and WO-A-96/14274. Others are described in WO-A-97/29057, DE-U-2,970,027 and WO-A-97/30002. Reference should be made to each of these. In general the fibres and the melt from which they are formed have an analysis (measured as % by weight of oxides) within the various ranges defined by the following normal and preferred lower and upper limits:
SiO₂ at least 30, 32, 35 or 37; not more than 51, 48, 45 or 43
Al₂O₃ at least 14, 15, 16 or 18; not more than 35, 30, 26 or 23
CaO at least 2, 8 or 10; not more than 30, 25 or 20
MgO zero or at least 2 or 5; not more than 25, 20 or 15
FeO (including Fe₂O₃) zero or at least 2, 5; not more than 15, 12 or 10
FeO + MgO at least 10, 12, 15; not more than 30, 25, 20
Na₂O + K₂O zero or at least 1; not more than 19, 14, 10
CaO + Na₂O + K₂O at least 10, 15; not more than 30, 25
TiO₂ zero or at least 1; not more than 6, 4, 2
TiO₂ + FeO at least 4, 6; not more than 18, 12
B₂O₃ zero or at least 1; not more than 5, 3
P₂O₅ zero or at least 1; not more than 8, 5
Others zero or at least 1; not more than 8, 5

The fibres preferably have a sintering temperature above 800°C, more preferably above 1000°C.

The melt preferably has a viscosity at fibre forming temperature of 5 to 100 poise, more preferably 10 to 70 poise at 1400°C.

The fibres preferably have an adequate solubility in lung fluids as shown by in vivo tests or in vitro tests, typically conducted in physiological saline buffered to about pH 4.5. Suitable solubilities are described in WO-A-96/14454. Usually the rate of dissolution is at least 10 or 20nm per day in that saline.

The preferred fibres which are made in the invention have an analysis which contains at least 15%, usually at least 17% and most usually at least 18% Al₂O₃, e.g., up to 30, 35 or 40%.

The MMV fibres may be made from the fibre forming mineral melt in conventional manner. Generally they are made by a centrifugal fibre forming process. For instance the fibres may be formed by a spinning cup process in which the melt is thrown outwardly through perforations in a spinning cup, or melt may be thrown off a rotating disc and fibre formation may be promoted by blasting jets of gas through the melt, or fibre formation may be conducted by pouring the melt onto the first rotor in a cascade spinner. Preferably the melt is poured onto the first of a set of two, three or four rotors each of which rotates about a substantially horizontal axis whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

The following are examples :

### Example 1

### Tuyere injection of granulated fibre re-inforced plastic.

The material is injected when granulated to <2mm. It comprises 40% by weight E-glass fibres in a matrix of polyester.
Charge:
4200 kg/h diabase
1750 kg/h briquette

| Briquette composition : | |
|---|---|
| Portland cement | 12% |
| Stonewool production waste | 70% |
| Converter slag (steelmaking) | 18% |

Additionally, 1050 kg/h of granulated fibre reinforced polyester are injected through the tuyeres. The fibre content melts in the furnace and contributes to the product which has the following chemistry :

| | |
|---|---|
| SiO₂ | 47.1% by weight |
| Al₂O₃ | 15.0% |
| TiO₂ | 1.9% |
| FeO | 7.8% |
| CaO | 14.5% |
| MgO | 9.1% |
| Na₂O | 2.1% |
| K₂O | 0.9% |
| B₂O₃ | 0.6% |
| Others : | 1.0% |

The polyester has calorific value of ∼36-40.000 KJ/kg which provides energy to the melting process and substitutes 370kg/h of the solid fossil fuel (coke).

### Example 2

### Injection through tuyeres of aluminium-containing inorganic waste and recycled polyethylene and polypropylene.

The material injected through the tuyeres is aluminium dross waste material from the casting of aluminium (treated aluminium salt slag) and granulated plastic waste (a mixture of polypropylene and polyethylene). In the injection process these materials are mixed. The plastic provides energy to the melting process as it combusts in the furnace and the treated aluminium salt slag contributes with inorganic material (mainly Al₂O₃) to the formation of the bio-soluble fibres. The treated aluminium salt slag contains a small proportion of metallic aluminium, which also contributes energy to the melting process.
Charge:
4160 kg/h diabase
2640 kg/h briquette
Briquette composition:
14% Portland type cement
6% diabase split
60% stone wool production waste
20% converter slag (steelmaking)

Additionally, 800 kg/h of the aluminium dross (treated aluminium salt slag) and 400 kg/h of plastic waste are injected through the tuyeres. The two components are stored separately in silos and mixed in the injection process. The proportions of treated aluminium salt slag and plastic waste are adjusted to optimise the melting process and the fibre chemistry.

The fibre product has the following chemical composition:

| | |
|---|---|
| SiO₂ | 41.2% by weight |
| Al₂O₃ | 21.0% |
| TiO₂ | 1.8% |
| FeO | 7.5% |
| CaO | 15.4% |
| MgO | 9.2% |
| Na₂O | 1.9% |
| K₂O | 1.0% |
| Others: | 1.0% |

The recycled plastic has a calorific value of -36-40.000 KJ/k and substitutes 310 kg/h of solid fossil fuel (coke).

### Example 3

### Injection of energy-containing waste product

A sufficient quantity of granulated aluminium-coated plastic (polyethylene) containing at least 20% aluminium and at least 20% PE is injected through the tuyeres as in Example 1 to ensure that the energy contained in the foil corresponds to the energy required to melt the bauxite in the briquette.

Three charges with a resultant Al₂O₃ content of 18%, 20% and 23% are described.

### A) 18% Al₂O₃

- A resultant Al₂O₃ content in the melt of 18% requires a charge that contains 86% cement briquettes. The briquette contains approx. 4.5% calcined bauxite (333 kg/h). The melt load is 8600 kg/h.
- The calcined bauxite is added in the briquette, and the melt energy is approx. 700 kWh/ton (2.52 MJ/kg).
- The heat energy in the PE granulate is 35.6 MJ/kg.

| Heat calculation: | | | | |
|---|---|---|---|---|
| | % | kg/h | MJ/kg | MJ/h |
| Bauxite | 3.9 | 333 | 2.52 | -839 |
| PE granulate | 0.3 | 22 | 35.6 | 839 |

### Resultant charge when injecting Al coated PE granulate

- Charge:: 0.3% Al coated PE granulate, 14% diabase, 86% briquette (12% cement, 6% olivine sand, 30% mineral wool process waste, 15% horticultural mineral wool waste, 4.5% calcined bauxite, 4% blasting sand, 28.5% diabase split). Plus 13.5% coke.

### Melt/fibre composition

| SiO₂ | Al₂O₃ | TiO₂ | FeO | CaO | MgO | Na₂O | K₂O | MnO | Viscosity Poise |
|---|---|---|---|---|---|---|---|---|---|
| 43.5 | 18.0 | 1.8 | 6.7 | 14.8 | 11.5 | 1.6 | 0.8 | 0.1 | 21.6 |

### B) 20% Al₂O₃

- A resultant Al₂O₃ content in the melt of 20% requires a charge containing 86% cement briquettes. The briquette contains approx. 8% calcined bauxite (592 kg/h). The melt load is 8600 kg/h.
- The calcined bauxite is added in the briquette, and the melt energy is approx. 700 kWh/ton (2.52 MJ/kg).
- The heat energy in the PE granulate is 35.6 MJ/kg.

| Heat calculation | | | | |
|---|---|---|---|---|
| | % | kg/h | MJ/kg | MJ/h |
| Bauxite | 6.88 | 592 | 2.52 | -1491 |
| PE granulate | 0.5 | 42 | 35.6 | 1491 |

### Resultant charge when injecting Al coated PE granulate

- Charge:: 0.5% Al coated PE granulate, 14% diabase, 86% briquette (12% cement, 5% olivine sand, 30% mineral wool process waste, 15% waste, 8% calcined bauxite, 4% waste blasting sand, 26% diabase split). Plus 13.5% coke.

### Melt/fibre composition

| SiO₂ | Al₂O₃ | TiO₂ | FeO | CaO | MgO | Na₂O | K₂O | MnO | Viscosity Poise |
|---|---|---|---|---|---|---|---|---|---|
| 42.3 | 20.3 | 1.8 | 6.5 | 14.7 | 10.8 | 1.6 | 0.8 | 0.1 | 24.2 |

### C) 23% Al₂O₃

- A resultant Al₂O₃ content in the melt of 23% requires a charge with 86% cement briquettes. The briquette contains 13% calcined bauxite (961 kg/h). The melt load is 8600 kg/h.
- The calcined bauxite is added in the briquette, and the melt energy is approx. 700 kWh/ton (2.52 MJ/kg).
- The heat energy in the PE granulate is 35.6 MJ/kg.

| Heat calculation | | | | |
|---|---|---|---|---|
| | % | kg/h | MJ/kg | MJ/h |
| Bauxite | 11.2 | 961 | 2.52 | -2423 |
| PE granulate | 0.8 | 68 | 35.6 | 2423 |

### Resultant charge when injecting Al coated PE granulate:

- Charge:: 0.8% Al coated PE granulate, 14% diabase, 86% briquette (12% cement, 6% olivine sand, 30% mineral wool process waste, 15% waste, 13% calcined bauxite, 4% waste blasting sand, 18% diabase split, 2% iron ore). Plus 13.5% coke.

| SiO₂ | Al₂O₃ | TiO₂ | FeO | CaO | MgO | Na₂O | K₂O | MnO | Viscosity Poise |
|---|---|---|---|---|---|---|---|---|---|
| 39.8 | 23,1 | 1.8 | 7.1 | 14.2 | 10.6 | 1.4 | 0.7 | 0.1 | 22.8 |

## Claims

1. A process for making MMV fibres comprising forming a melt by heating a mineral charge in a furnace by combustion of fuel with combustion air which is injected into the furnace and forming fibres from the melt, **characterised in that** a powdered waste of 20 to 80% by weight organic material and 80 to 20% inorganic material is injected with the combustion air whereby the organic material is combusted and the inorganic material is melted.

2. A process according to claim 1 in which the powdered waste is selected from glass reinforced plastic, municipal sewage sludge, and paper mill sludge.

3. A process according to claim 1 or claim 2 in which the powdered waste is injected with combustion air and combustable material.

4. A process according to claim 1 or claim 2 in which the furnace is a shaft furnace and the powdered waste is injected with combustion air through tuyeres near the base of the furnace.

5. A process according to any preceding claim in which the melt and the fibres contain at least 18% Al₂O₃ by weight.

6. A process according to any preceding claim in which the powdered waste includes sufficient organic material, or is injected with sufficient additional organic material, to generate sufficient heat substantially to melt or dissolve the inorganic material in the injected waste.

7. A process according to claim 1 in which the inorganic material has an aluminium content of at least 20%.

8. A process according to claim 7 in which the inorganic material comprises 0.5 to 10 wt.% metallic aluminium and 50 to 90 wt.% alumina Al₂O₃.

## Patentansprüche

1. Verfahren zur Herstellung von künstlichen glasartigen Fasern (MMV-Fasern) umfassend das Bilden einer Schmelze durch Erwärmen einer mineralischen Charge in einem Ofen durch Verbrennung von Brennstoff mit Verbrennungsluft, die in den Ofen eingeblasen wird, und das Bilden von Fasern aus der Schmelze, **dadurch gekennzeichnet, daß** ein pulverförmiger Abfall aus 20 bis 80 Gew.-% organischem Material und 80 bis 20% anorganischem Material mit der Verbrennungsluft eingeblasen wird, wodurch das organische Material verbrannt und das anorganische Material geschmolzen wird.

2. Verfahren nach Anspruch 1, in welchem der pulverförmige Abfall aus Glasverstärktem Kunststoff, kommunalem Klärschlamm und Papierfabrik-Schlamm ausgewählt wird.

3. Verfahren nach Anspruch 1 oder Anspruch 2, in welchem der pulverförmige Abfall mit Verbrennungsluft und brennbarem Material eingeblasen wird.

4. Verfahren nach Anspruch 1 oder Anspruch 2, in welchem der Ofen ein Schachtofen ist und der pulverförmige Abfall mit Verbrennungsluft durch Düsen in der Nähe des Ofenbodens eingeblasen wird.

5. Verfahren nach irgendeinem vorhergehenden Anspruch, in welchem die Schmelze und die Fasern mindestens 18 Gew.-% Al₂O₃ enthalten.

6. Verfahren nach irgendeinem vorhergehenden Anspruch, in welchem der pulverförmige Abfall genügend organisches Material enthält oder mit genügend zusätzlichem organischen Material eingeblasen wird, um ausreichend Wärme zu erzeugen, um im wesentlichen das anorganische Material im eingeblasenen Abfall zu schmelzen oder zu lösen.

7. Verfahren nach Anspruch 1, in welchem das anorganische Material einen Aluminiumgehalt von mindestens 20% aufweist.

8. Verfahren nach Anspruch 7, in welchem das anorganische Material 0,5 bis 10 Gew.-% metallisches Aluminium und 50 bis 90 Gew.-% Aluminiumoxid, Al₂O₃, umfaßt.

## Revendications

1. Procédé pour produire des fibres VA comprenant la formation d'une masse fondue par chauffage d'une charge minérale dans un four par combustion d'un combustible avec de l'air de combustion qui est injecté dans le four et la formation de fibres à partir de la masse fondue, **caractérisé en ce que** des déchets pulvérulents de 20 à 80% en masse de matière organique et de 80 à 20% de matière inorganique sont injectés avec l'air de combustion de sorte que la matière organique est brûlée et que la matière inorganique est fondue.

2. Procédé selon la revendication 1 où les déchets pulvérulents sont choisis parmi les matières plastiques renforcées par du verre, les boues d'égouts municipales et les boues de fabrique de papier.

3. Procédé selon la revendication 1 ou la revendication 2 où les déchets pulvérulents sont injectés avec de l'air de combustion et une matière combustible.

4. Procédé selon la revendication 1 ou la revendication 2 où le four est un four à cuve et les déchets pulvérulents sont injectés avec de l'air de combustion par des tuyères à proximité de la base du four.

5. Procédé selon l'une quelconque des revendications précédentes où la masse fondue et les fibres contiennent au moins 18% de Al₂O₃ en masse.

6. Procédé selon l'une quelconque des revendications précédentes où les déchets pulvérulents comprennent suffisamment de matière organique, ou subissent l'injection d'une quantité suffisante de matière organique supplémentaire, pour produire suffisamment de chaleur pour sensiblement faire fondre ou dissoudre la matière inorganique dans les déchets injectés.

7. Procédé selon la revendication 1 où la matière inorganique a une teneur en aluminium d'au moins 20%.

8. Procédé selon la revendication 7 où la matière inorganique comprend 0,5 à 10% en masse d'aluminium métallique et 50 à 90% en masse d'alumine Al₂O₃.
